# EUROPEAN PATENT SPECIFICATION

(11) **EP 4 137 392 B1**
(45) Date of publication and mention of the grant of the patent: **06.08.2025**
(21) Application number: 21808270.9
(22) Date of filing: 19.05.2021
(51) Int. Cl.: B62D 55/084, B62D 55/10, B66C 15/00, E02F 9/02, B66C 23/78, B66C 23/88, B66C 23/90

(54) **CONSTRUCTION MACHINE**
BAUMASCHINE
ENGIN DE CHANTIER

(30) Priority: 22.05.2020 JP 2020089510
(43) Date of publication of application: 22.02.2023
(73) Proprietor: KOBELCO CONSTRUCTION MACHINERY CO., LTD., Hiroshima-shi, Hiroshima 731-5161 (JP)
(72) Inventor: MASAI, Hiroki, Akashi-shi, Hyogo 674-0063 (JP)
(74) Representative: TBK
(86) International application number: PCT/JP2021/019008
(87) International publication number: WO 2021/235492

(56) References cited:
- JP-A- H05 139 343
- JP-A- H1 053 169
- JP-A- H1 053 169
- JP-U- H0 719 074
- US-A1- 2018 194 396

## Description

### Technical Field

The present invention relates to a construction machine.

### Background Art

There is known a construction machine, for example, such as a crane, a hydraulic shovel, a pile driver, etc., the construction machine including a lower traveling body, an upper turning body, and a boom. The lower traveling body includes traveling means including a pair of crawlers. The upper turning body is mounted on the lower traveling body capably of turning. The boom is attached to the upper turning body capably of derricking.

The construction machine provided with the pair of crawlers is loaded on a trailer or the like to be transported. When the construction machine is transported, therefore, it is preferable that the interval between the pair of crawlers is small. On the other hand, during the work by the construction machine, it is preferable that the interval between the pair of crawlers is large to secure the stability thereof. Besides, there can be also a case where the interval between the pair of crawlers is limited depending on the work place. To satisfy these requirements, a traveling body is known including a pair of crawler units and an expansion/contraction device. Each of the crawler units includes a crawler, and the expansion/contraction device changes the interval between the pair of crawler units stepwise.

In such a construction machine, the stability of the car body is varied depending on the interval between the pair of crawler units; for example, the allowable value of the maximum moment acting on the construction machine during work is reduced with decrease in the interval between the pair of crawler units. This may cause trouble in work when the interval between the pair of crawler units is forgotten to be enlarged or when the interval between the pair of crawler units is insufficient for the work to be performed.

As means for preventing such inconvenience, document JP 2002- 187 580 A discloses an expansion/contraction detection device. The device includes a plurality of fixing pins for fixing the interval between a pair of crawler units, an accommodation member for accommodating the pin that is included in the plurality of fixing pins but not used, and a pin detection means that detects the fixing pin that is stored in the accommodation member. The device utilizes the fact that the type and the number of fixing pins to be used among the plurality of fixing pins are different depending on the interval between the pair of crawler units, for the purpose of providing information about the interval between the pair of crawler units by detection of the fixing pin stored in the accommodation member, namely, the unused fixing pin, with no use of a detection mechanism to be provided in a movable part that is moved with the change in the interval between the pair of crawler units. The omission of the detection mechanism eliminates the need for complicated wiring.

The conventional expansion/contraction detection device, however, do nothing beyond estimating the interval between the pair of crawler units based on the information on the unused fixed pins. This hinders the possibility of erroneous detection of the interval from being sufficiently reduced.

Document JP H10- 53 169 A discloses a construction machine according to the preamble of claim 1. Specifically, there is disclosed a crawler belt expansion contraction detecting device for a working machine which detects that a distance between crawlers is situated in an intermediate position. Respective times when a crawler belt is situated in an expansion position, in an intermediate position, and in a contraction position are detected by pressure detectors connected to a hydraulic cylinder to effect expansion and contraction of the crawler. The detecting results are inputted to a controller, and the controller selects a desired rated load curve from a rated load curve stored at a moment limiter and switches lifting capacity of a crane.

Furthermore, document US 2018/194 396 A1 discloses a control system for a machine having a support structure, a track roller frame assembly coupled to the support structure and a machine body coupled to the support structure. The electronic control system includes a lateral position sensor that is coupled to the track roller frame assembly and is configured to detect a lateral position of the track roller frame assembly relative to the support structure, an angular position sensor that is coupled to the machine body and is configured to detect an angular position of the machine body relative to the support structure, and a processor configured to determine a parameter for the tracked machine based on the detected lateral position of the track roller frame assembly, the detected lateral position indicative asymmetrical positioning a track roller frame assembly, and the detected angular position of the machine body, and provide feedback based on the parameter for the tracked machine.

### Summary of Invention

It is an object of the present invention to provide a construction machine including a pair of crawler units and an expansion/contraction device for changing the interval between the pair of crawler units, the construction machine being capable of detecting the interval between the pair of crawler units more reliably than before without complicated wiring.

This object is achieved by a construction machine according to claim 1. Advantageous further developments are as set forth in the dependent claims.

### Brief Description of Drawings

FIG. 1 is a side view showing a construction machine according to a first embodiment of the present invention;
FIG. 2 is a plan view showing a lower traveling body of the construction machine shown In FIG. 1, in which a pair of crawler units of the lower traveling body are fixed to a pair of full contraction positions;
FIG. 3 is a front view of the lower traveling body shown in FIG. 2;
FIG. 4 is a plan view showing the lower traveling body of the construction machine shown in FIG. 1, wherein the pair of crawler units are fixed at a pair of intermediate projection positions;
FIG. 5 is a front view of the lower traveling body shown in FIG. 4;
FIG. 6 is a plan view in which a position detection unit of the lower traveling body shown in FIG. 4 is enlargedly shown;
FIG. 7 is a plan view showing the lower traveling body of the construction machine shown in FIG. 1, wherein the pair of crawler units are fixed at a pair of full projection positions;
FIG. 8 is a front view of the lower traveling body shown in FIG. 7;
FIG. 9 is a plan view of a position detection unit of the lower traveling body shown in FIG. 7, in which the position detection unit is enlargedly shown;
FIG. 10 is a front view of a display device provided in an operation cabin of the construction machine shown in FIG. 1;
FIG. 11 is a plan view in which a position detection unit of the construction machine according to a second embodiment is enlargedly shown; and
FIG. 12 is a perspective view showing a partition plate shown in FIG. 11 and surrounding thereof.

### Description of Embodiments

Below will be a construction machine according to an embodiment of the present invention. The outline thereof is as follows.

The construction machine includes a lower traveling body and an upper turning body mounted on the lower traveling body capably of turning. The lower traveling body includes a car body, a pair of crawler units, an expansion/contraction device, and at least one position detection unit. The pair of crawler units are spaced in a width direction of the lower traveling body and supported by the car body so as to have a changeable unit interval, which is an interval between the pair of crawler units in the width direction. The expansion/contraction device moves the pair of crawler units relatively to each other in the width direction so as to change the unit interval. The expansion/contraction device is capable of fixing the pair of crawler units at any of a plurality of different pairs of unit positions. The plurality of pairs of unit positions include a pair of full contraction positions involving the smallest unit interval, and a plurality of pairs of width enlargement positions involving respective unit intervals, each of which is the unit interval larger than the unit interval according to the pair of full contraction positions, the respective unit intervals being different from each other. The at least one position detection unit includes a sensing target part and a plurality of sensors corresponding to the plurality of pairs of width enlargement positions, respectively. One of the sensing target part and the plurality of sensors is fixed to the car body, and the other of the sensing target part and the plurality of sensors is supported by one crawler unit, which is one of the pair of crawler units, so as to be moved in the width direction together with the one crawler unit. The sensing target part and the plurality of sensors are disposed so as to allow only a corresponding sensor included in the plurality of sensors to sense the presence of the sensing target part, the corresponding sensor being a sensor corresponding to the pair of width enlargement positions at which the pair of crawler units are being located.

According to the construction machine, the pair of unit positions at which the pair of crawler units are located can be directly identified based on which sensor out of the plurality of sensors senses the sensing target part. In addition, each of the sensors only has to sense the presence of the sensing target part, involving no requirement for complex wiring.

In the construction machine, the sensing target part and the plurality of sensors are disposed so as to allow the sensing target part to come into contact with only the corresponding sensor included in the plurality of sensors, the corresponding sensor being a sensor corresponding to the pair of width enlargement positions at which the pair of crawler units are being located, and each of the sensors is configured to sense a contact of the sensor itself with the sensing target part. The contact of each of the sensors with the sensing target part allows each of the sensors to sense the presence of the sensing target part more reliably.

Specifically, the sensing target part includes a wire harness including a plurality of electric wires bundled with each other, and the wire harness has a connection end that is contactable with each of the sensors. The use of the wire harness facilitates the contact of the sensing target part formed by the wire harness with each of the sensors.

Specifically, it is preferable that the connection end of the wire harness is provided with a harness connector and each of the sensors is provided with a sensing-side connector connectable to the harness connector. The coupling between the harness connector and the sensing-side connector ensures the contact of the wire harness with each of the sensors, thereby reducing the risk of malfunction.

Regarding the sensing target part and the plurality of sensors, it is preferable that the plurality of sensors are fixed to the car body while the sensing target part is supported by the one crawler unit so as to be moved in the width direction together with the one crawler unit. Since the wiring required for the position detection unit is mainly connected to the plurality of the sensors, fixing the plurality of sensors to the car body and making the sensing target part supported by the pair of crawler units movable relatively to the car body allows the wiring to be more easily handled.

In the case of the construction machine further including a boom attached to the upper turning body capably of derricking and a moment limiter that determines an upper limit value of an overturning moment that acts on the construction machine when the boom is derricked and controls the overturning moment so as to prevent the overturning moment from exceeding the upper limit value, the moment limiter is preferably configured to set the upper limit value in correspondence to the sensor that senses the presence of the sensing target part out of the plurality of sensors. This allows the stability of the construction machine to be secured by use of the result of the detection by the position detection unit, that is, the unit positions.

It is preferable that the sensing target part and the plurality of sensors are arranged so as to prevent the presence of the sensing target part from being sensed by any of the plurality of sensors when the pair of crawler units are located at the pair of full contraction positions. This makes it possible to judge the pair of crawler units to be located at the pair of full contraction positions when neither of the plurality of sensors senses the presence of the sensing target part, thereby establishing a fail-safe operation.

In the case of the construction machine with the upper turning body that further includes an operation cabin, it is preferable that a display device is provided in the operation cabin to display the pair of unit positions that is identified based on the results of sensing by the plurality of sensors. The display device enables an operator in the operation cabin to easily confirm the unit positions, thereby preventing the work from being performed with non-appropriate width enlargement positions.

Next will be specifically described a construction machine according to an embodiment of the present invention with reference to the drawings.

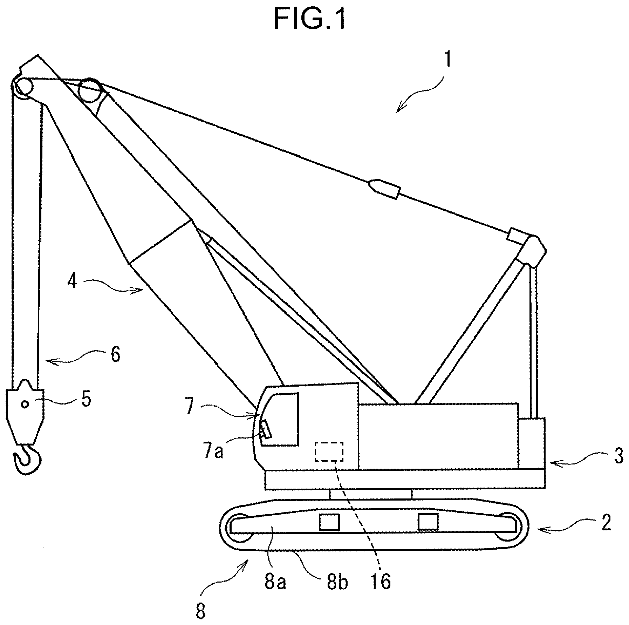

FIG. 1 shows a construction machine 1 according to a first embodiment of the present invention. The construction machine 1 includes a lower traveling body 2, an upper turning body 3, a boom 4, a hook 5, a wire rope 6, and a moment limiter 16. The upper turning body 3 is mounted on the lower traveling body 2 capably of turning horizontally. The boom 4 is attached to the upper turning body 3 capably of derricking. The wire rope 6 is suspended from the tip of the boom 4. The hook 5 is attached to the lower end of the thus suspended wire rope 6. The moment limiter 16 controls a moment in an overturning direction, namely, an overturning moment, acting on the construction machine when the boom 4 is derricked.

The upper turning body 3 includes an operation cabin 7 and a plurality of not-graphically-shown winches. The operation cabin 7 is provided at a position adjacent to the proximal end of the boom 4, that is, the part to be attached to the upper turning body 3. The plurality of winches include a boom derricking winch for derricking the boom 4 and a main winding winch for winding up a suspended load.

The operation cabin 7 allows an operator to perform operations of the construction machine 1 in the cabin 7. In the operation cabin 7 is provided a display device 7a as shown in FIG. 1. The display device 7a performs necessary display for operation to allow the operator to control the attitude and the like of the construction machine 1 with reference to the display.

The boom 4 has a proximal and a distal end opposite thereto. The proximal end is attached to the upper turning body 3 so as to allow the boom 4 to be derricked, that is, to make vertically rotational movement. A sheave is attached to the distal end capably of rotating about a horizontal axis to guide the wire rope 6.

The hook 5 is fixed to the lower end of the wire rope 6. The suspended load is lifted and lowered while being hooked on the hook 5.

The wire rope 6 is placed on the sheave and wound around the main winding winch. The main winding winch may be installed on a back surface of the boom 4. The back surface is a surface facing upward when the boom 4 is fallen down.

The moment limiter 16 limits the maximum value of the overturning moment that acts on the construction machine 1 to prevent the construction machine 1 from overturning, that is, determines the upper limit value of the overturning moment. The overturning moment depends on the product of the weight of the suspended load and the horizontal distance from the center of gravity of the construction machine 1 to the suspended load. The restriction of the maximum value of the overturning moment by the moment limiter 16 limits the maximum value of the horizontal distance from the center of gravity of the construction machine 1 to the suspended load in accordance with the weight of the suspended load, that is, limits the boom angle at which the boom 4 is allowed to be tilted. The moment limiter 16, thus, determines the upper limit value of the overturning moment and controls the motion of the construction machine 1 so as to prevent the overturning moment from exceeding the upper limit value.

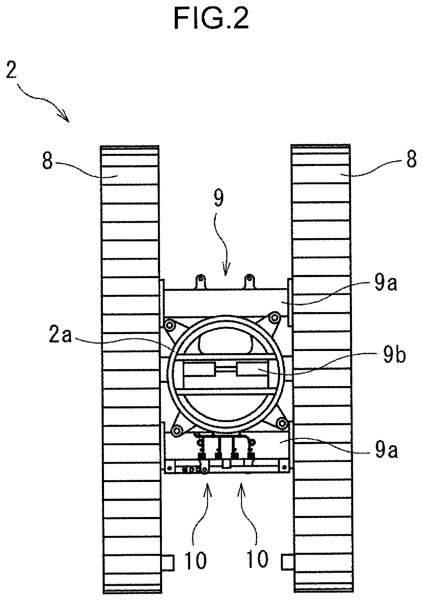

As shown in FIG. 2, the lower traveling body 2 includes a car body 2a, a pair of crawler units 8, an expansion/contraction device 9, and a pair of position detection units 10. The pair of crawler units 8 are spaced at a unit interval therebetween in a width direction of the lower traveling body 2, that is, a direction orthogonal to the traveling direction of the lower traveling body 2, and attached to the car body 2a so as to render the unit interval changeable. The expansion/contraction device 9 is attached to the car body 2a to move the pair of crawler units 8 in the width direction relatively to the car body 2a so as to increase/decrease the interval between the pair of crawler units 8 in the width direction, that is, the unit interval. The pair of position detection units 10 are attached to the car body 2a to detect a pair of unit positions, which are respective positions of the pair of crawler units 8 in the width direction.

As shown in FIG. 1, the pair of crawler units 8 constitute a traveling device of the lower traveling body 2. As shown in FIG. 1, each of the crawler units 8 includes a crawler frame 8a and a crawler 8b disposed around the crawler frame 8a.

As shown in FIG. 2, the expansion/contraction device 9 includes a pair of axles 9a, an expansion/contraction cylinder 9b, and a positioning link 13. The pair of axles 9a are spaced in the traveling direction at front and rear and laid between respective crawler frames 8a of the pair of crawler units 8. Specifically, the pair of axles 9a are fixed to the car body 2a so as to extend in the width direction, and supports the pair of crawler units 8 while penetrating the pair of crawler units 8 so as to allow the pair of crawler units 8 to move in the width direction. The pair of crawler units 8, therefore, are supported by the car body 2a through the pair of axles 9a. The expansion/contraction cylinder 9b is formed of a hydraulic cylinder capable of expanding and contracting horizontally, specifically, in the width direction, and disposed so as to cause the unit interval, which is the interval between the pair of crawler units 8, to be increased and decreased by the expansion and contraction. When the expansion/contraction cylinder 9b extends in the width direction (left-right direction), the axle 9a may be extended by an adapter attached to the axle 9a.

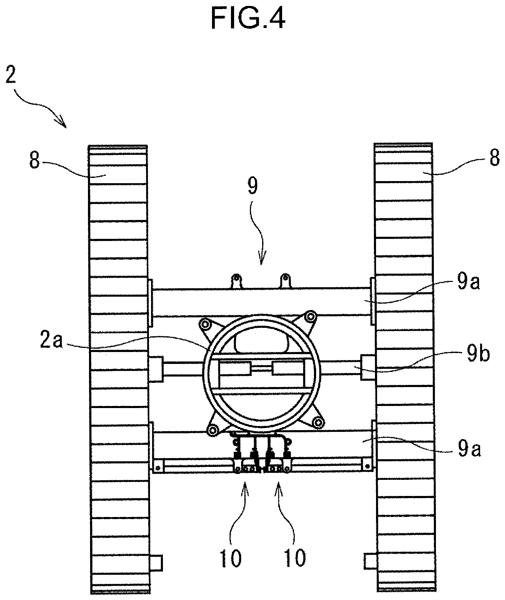

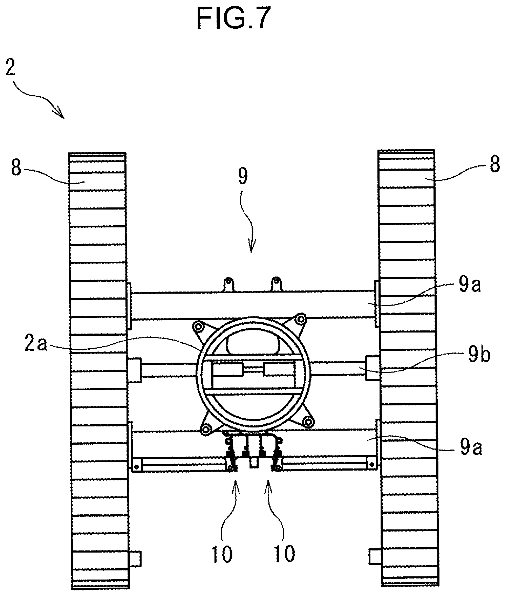

The expansion/contraction device 9 is configured to be capable of fixing the pair of crawler units 8 at any of a plurality of pairs of unit positions. The plurality of pairs of unit positions include a pair of full contraction positions and a plurality of pairs of width enlargement positions. As shown in FIG. 2, the pair of full contraction positions are positions involving the unit interval that is the smallest one. The plurality pairs of width enlargement positions involve respective unit intervals, each of which is the unit interval larger than the unit interval according to the pair of full contraction positions, and the respective unit intervals are different from each other. The plurality of pairs of width enlargement positions according to the present embodiment include two pairs of width enlargement positions shown in FIG. 4 and 7, namely, a pair of intermediate projection positions shown in FIG. 4 and a pair of full projection positions shown in FIG. 7. The pair of intermediate projection positions are positions involving the unit interval that is relatively small among the plurality of pairs of width enlargement positions, that is, involving a small projection dimension in the width direction of the pair of crawler units 8 from the car body 2a, and the pair of full projection positions are positions involving the unit interval that is the largest one among the plurality of pairs of width enlargement positions, that is, involving the largest projection dimension in the width direction of the pair of crawler units 8 from the car body 2a.

The pair of full contraction positions are positions that minimizes the car width of the construction machine 1, for allowing the construction machine 1 to be loaded on a trailer or the like to be transported. On the other hand, each of the pair of intermediate projection positions and the pair of full projection positions, which are the plurality of pairs of width enlargement positions, are positions for allowing the construction machine 1 to perform work. According to the pair of intermediate projection positions, which renders the car width of the construction machine 1 relatively small, a large working space is not required but the stability of the construction machine 1 is a little low. In contrast, according to the pair of full projection positions, which maximizes the car width of the construction machine 1, a large work space is required but the stability of the construction machine 1 is high.

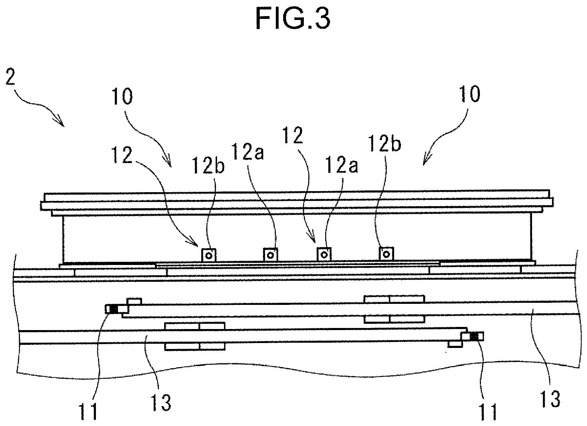

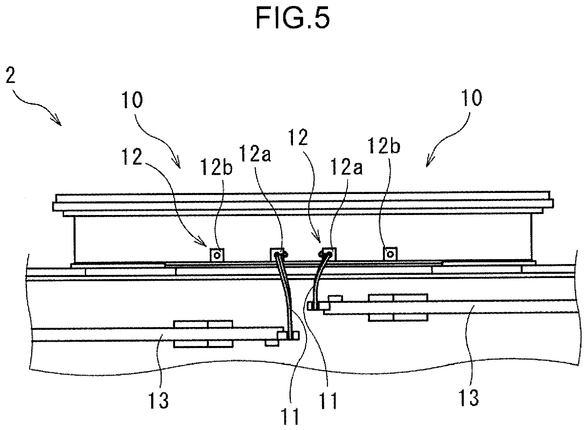

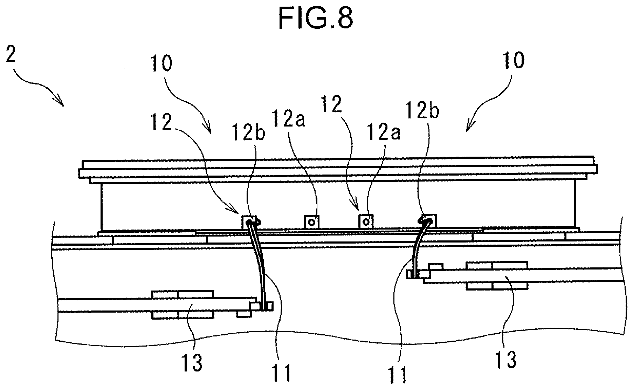

As shown in FIG. 3, 5 and 8, each of the position detection units 10 includes a wire harness 11 and a plurality of sensors 12. The wire harness 11 constitutes a sensing target part. Each of the sensors 12, namely, a first sensor 12a and a second sensor 12b in the present embodiment, is capable of making contact with the wire harness 11 and capable of sensing the contact. The positioning link 13 supports the wire harness 11. The pair of position detection units 10 are disposed at an appropriate part of the lower traveling body 2, for example, a front part or a rear part.

The positioning link 13 has a proximal end connected to, for example, the crawler frame 8a and a distal end opposite thereto, being movable in the width direction integrally with each of the crawler units 8 along with the increase and decrease in the unit interval while supporting the wire harness 11. The positioning link 13 is provided with a plurality of through holes corresponding to the plurality of pairs of unit positions, respectively. The through holes corresponding to the pair of unit positions at which the pair of crawler units 8 should be fixed, out of the plurality of through holes, and the through holes provided in the car body 2a are mutually matchable to allow a fixing pin to be insert through the matched through holes to thereby fix the pair of crawler units at the pair of unit positions, that is, to position them.

The wire harness 11 is supported by one crawler unit 8 out of the pair of crawler units 8, specifically, the crawler unit 8 corresponding to the position detection unit 10 to which the wire harness 11 belongs, through the positioning link 13 connected to the one crawler unit 8. Specifically, the wire harness 11 is supported by the distal end of the positioning link 13 to be moved in the width direction integrally with the one crawler unit 8 to which the positioning link 13 is connected out of the pair of crawler units 8. The wire harness 11, therefore, is moved outward in the width direction together with the crawler unit 8 which is moved outward in the width direction for enlarging the unit interval, and moved inward in the width direction (in some cases, beyond the center line with respect to the width direction of the lower traveling body) together with the crawler unit 8 which is moved inward in the width direction for reducing the unit interval. The positioning link 13 may be disposed at not only a first part where the wire harness 11 is disposed out of the front part and the rear part of the lower traveling body 2 but also a second part opposite to the first part. In short, the positioning link 13 may be provided to each of the front part and the rear part of the lower traveling body 2.

The plurality of sensors 12 are fixed on the car body 2a. The number of the plurality of sensors 12 in each of the position detection units 10 preferably corresponds to the number of the plurality of pairs of width enlargement positions. The pair of crawler units 8 of the construction machine 1 according to the present embodiment have the two pairs of width enlargement positions, that is, the pair of intermediate projection positions and the pair of full projection positions, and, in correspondence therewith, the plurality of sensors 12 include two sensors, that is, the first and second sensors 12a and 12b. The plurality of sensors 12 does not absolutely have to be directly fixed to the car body 2a; it may be indirectly fixed to the car body 2a through another member so as to keep the relative positions of the plurality of sensors 12 to the car body 2a. For example, at least a part of the plurality of sensors 12 may be fixed to the axle 9a or the axle 9a.

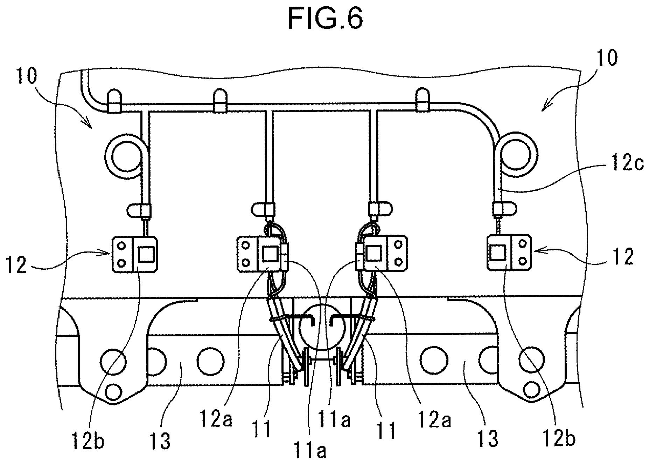

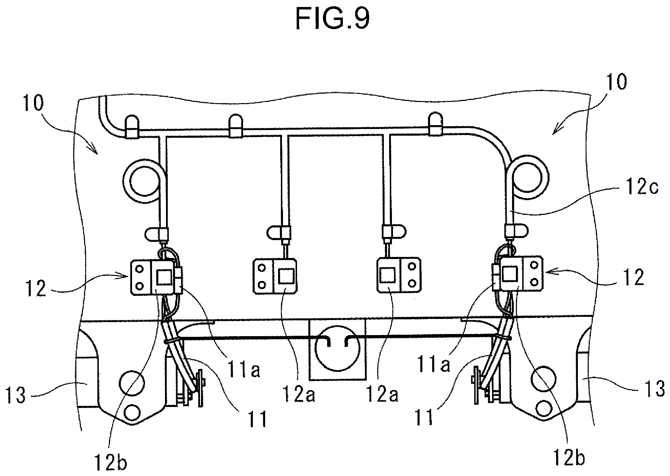

The wire harness 11 includes a plurality of electric wires bundled together with each other, the plurality of electric wires including a plurality of projection detection signal lines 11a as shown in FIG. 6 and 9. On the other hand, each of the first and second sensors 12a and 12b includes a short-circuiting circuit. Each of the detection projection detection signal lines 11a has a terminal provided with a harness connector, which is contactable with the sensor 12 so as to be connected to both ends of the short-circuiting circuit of the first sensor 12a or the second sensor 12b, for example, by a worker's operation, thereby allowing a short-circuit current to flow through the short-circuiting circuit. The sensor 12 is configured to sense the contact of the wire harness 11 with the sensor 12 by sensing the short-circuit current. The sensor 12 is not limited to one to be connected to the wire harness 11 by manual operation. The sensor 12 only has to sense the presence of a sensing target part within the sensing range thereof; it may be, for example, a limit switch that is automatically switchable to ON by contact with the sensing target part, or a proximity sensor that senses the proximity of the sensed part within a predetermined distance and automatically generates a sensing signal.

The wire harness 11 and the plurality of sensors 12 are arranged so as to satisfy the following conditions (1) and (2): Condition (1) when the pair of crawler units 8 are located at the pair of intermediate projection positions shown in FIG. 6, the first sensor 12a included in the plurality of sensors 12 is located on the inner side of the wire harness 11 to allow the wire harness 11 to be brought into contact with only the first sensor 12a; Condition (2) when the pair of crawler units 8 are located at the pair of full projection positions shown in FIG. 9, the second sensor 12b included in the plurality of sensors 12 is located on the inner side of the wire harness 11 to allow the wire harness 11 to be brought into contact with only the second sensor 12b. The first and second sensors 12a and 12b, thus, are disposed so as to be contactable with the wire harness 11 at the pair of intermediate projection positions and at the pair of the full projection positions, respectively. In summary, each of the position detection units 10 of the construction machine 1 allows the different sensors 12 included in the plurality of sensors 12 to be brought into contact with the wire harness 11 at each of the pairs of width enlargement positions.

The wire harness 11 is removed from any of the plurality of sensors 12 as shown in FIG. 3 when the pair of crawler units 8 are located at the pair of full contraction positions, and held at the distal end of the positioning link 13, for example, in a bundled state. The wire harness 11, therefore, is prevented from contact with any of the plurality of sensors 12 when the pair of crawler units 8 are located at the pair of full contraction positions. This allows the pair of unit positions to be judged to be the pair of full contraction positions at the any time when, for example, the pair of unit positions that is set corresponding to the removal of the wire harness 11 from any of the plurality of sensors 12 is forgotten, thus establishing fail-safe operation.

When one of the plurality of sensors 12 senses the contact of the sensor 12 itself with the wire harness 11, the information about the sensing sensor 12 is transmitted to a proper place in the operation cabin 7, for example, the moment limiter 16 or the display device 7a, through the detection signal line 12c shown in FIG. 6 and FIG. 9.

The moment limiter 16 is configured to determine the upper limit value of the overturning moment corresponding to the sensor 12 that makes contact with the wire harness 11 out of the plurality of sensors 12, that is, corresponding to the detected unit position. Specifically, when the first sensor 12a senses the contact thereof with the wire harness 11, which contact allows the pair of crawler units 8 to be judged to be located at the pair of intermediate projection positions, the moment limiter 16 sets the upper limit value to a relatively low value corresponding to the pair of intermediate projection positions. On the other hand, when the second sensor 12b senses the contact thereof with the wire harness 11, which contact allows the pair of crawler units 8 to be judged to be located at the pair of full projection positions, the moment limiter 16 sets the upper limit value to a high value corresponding to the pair of full projection positions.

The correspondence of the maximum value of the overturning moment thus limited by the moment limiter 16, namely, the upper limit value of the overturning moment, to the sensor 12 in contact with the wire harness 11 enables the stability of the construction machine 1 to be reliably secured by effective utilization of the result of the detection by the position detection unit 10, namely, the pair of unit positions. The moment limiter 16 is preferably configured to set the upper limit value of the overturning moment automatically based on the information transmitted through the detection signal line 12c as described above, that is, the information about the sensor 12 that senses the contact thereof with the wire harness 11; however, other modes are not excluded, for example, in which an operator manually sets the upper limit value based on the information. In such mode, it is also possible to configure the moment limiter 16 to reject acceptance of erroneous setting when an main operation involving the erroneous setting is performed.

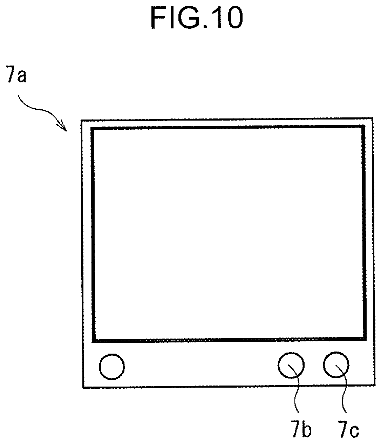

The display device 7a provided in the operation cabin 7 is preferably configured to display the pair of width enlargement positions of the pair of crawler units 8 determined based on the results of the sensing by the plurality of sensors 12. As shown in FIG. 10, for example, the display device 7a may include an intermediate-projection-position detection lamp 7b and a full-projection-position detection lamp 7c which are disposed in the lower part of the display device 7a. For facilitation of the identification of the detected width enlargement position, it is preferable to light the detection lamps 7b and 7c in different colors. This enables an operator to easily confirm the unit positions, thereby restraining work from being performed at wrong unit positions.

The construction machine 1 can be used, for example, as follows.

At the time of arrival of the transported construction machine 1 at the work site, the pair of crawler units 8 are fixed at the pair of full contraction positions shown in FIG. 3. Meanwhile, the wire harness 11 is kept in an accommodated state in contact with none of the plurality of sensors 12. Specifically, one end of the wire harness 11, namely, the fixed end, is fixed to the distal end of the positioning link 13, while the other end, namely, the connection end provided with the harness connector, is removed from each of the sensors 12 to make no contact with any of the plurality of sensors 12.

In the above-described work site, the pair of crawler units 8 are projected from the pair of full contraction positions to one pair of the plurality pairs of width enlargement positions, namely, the pair of intermediate projection positions or the pair of full projection positions in this embodiment, for the preparation of the work by the construction machine 1. In other words, the interval between the pair of crawler units 8 is enlarged by the expansion of the expansion/contraction cylinder 9b of the expansion/contraction device 9. Meanwhile, the wire harness 11 is connected to the sensor 12 corresponding to the width enlargement positions out of the plurality of sensors 12, for example, by manual operation by the operator, so as to bring the harness connector at the connection end into contact with the sensor 12.

Until this connection work is performed, the wire harness 11 is kept from contact with any of the plurality of sensors 12 regardless of movement of the pair of crawler units 8 to the pair of intermediate projection positions or the pair of full projection positions. Thus, any of the plurality of sensors 12 is kept from detection of the positions of the pair of crawler units 8, and it is judged that that the pair of crawler units 8 are still at the pair of full contraction positions, i.e., that no work can be performed by the construction machine 1. This causes the judgement that no work can be performed by the construction machine 1 to be continued when the work for connecting the wire harness 11 to any one of the plurality of sensors 12 is forgotten. The fail-safe operation is thus established.

On the other hand, when the wire harness 11 is connected to the first sensor 12a so as to make contact with the first sensor 12a in the state where the pair of crawler units 8 are projected to the pair of intermediate projection positions, or connected to the second sensor 12b so as to make contact with the second sensor 12b in the state where the pair of crawler units 8 are projected to the pair of full projection positions, it can be reliably detected that the pair of crawler units 8 are located at the pair of intermediate projection positions or the pair of full projection positions.

After the finish of the work by the construction machine 1, the connection end (the harness connector) of the wire harness 11 is removed from the sensor 12 that had been connected with the wire harness 11 out of the plurality of sensors 12, for example, by manual operation by an operator, and the wire harness 11 is stored in a bundled state. Specifically, the wire harness 11 may be either supported by the distal end of the positioning link 13 as it is or removed from the positioning link 13 and stored in another part. The pair of crawler units 8 are, thereafter, retracted to the pair of full contraction positions, which brings the construction machine 1 into a transportable state (non-working state).

The construction machine 1 that has been explained above is configured to allow the wire harness 11 as the sensing target part to be brought into contact with the different sensors 12 when the pair of crawler units 8 are located at the pairs of width enlargement positions, respectively. This enables the unit positions to be directly identified based on the senser 12 that is being in contact with the wire harness 11 out of the plurality of sensors 12. Besides, each of the sensors 12 to make contact with the wire harness 11 to sense the presence of the wire harness 11 requires no complex wiring, which allows the wiring to be easily handled. The construction machine 1, thus, enables the unit positions, which are the positions of the pair of crawler units 8 with respect to the width direction, to be directly detected with no complicated wiring.

Since the wiring required in each of the position detection units 10 is mainly connected to the plurality of sensors 12, it improves the easiness of wiring to fix the plurality of sensors 12 to the car body 2a while attaching the wire harness 11 as the sensing target part to the pair of crawler units 8 through the positioning links 13 to allow the pair of crawler units 8 to be moved in the width direction integrally with each of the crawler units 8.

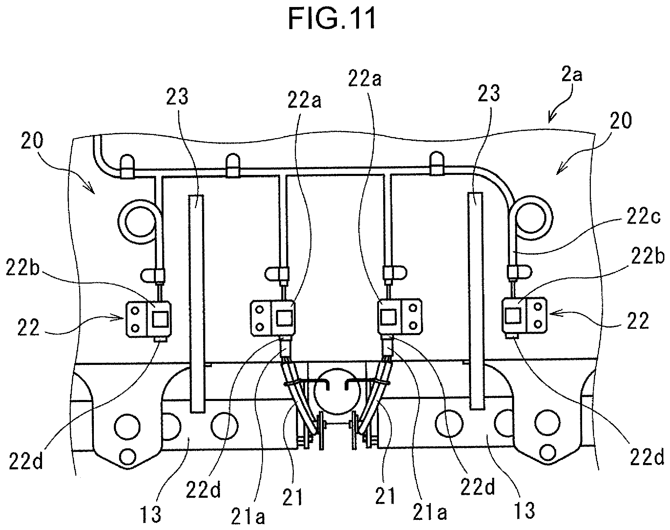

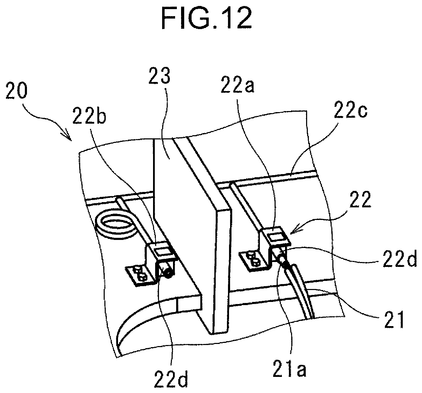

Next will be described a second embodiment with reference to FIG. 11 and 12. Similarly to the construction machine of the first embodiment shown in FIG. 1 and 2, the construction machine according to the second embodiment includes a lower traveling body, an upper turning body mounted on the lower traveling body capably of turning, a boom attached to the upper turning body capably of derricking, a hook, and a wire rope allowing the hook to be suspended from the tip of the boom. The lower traveling body includes: a car body; a pair of crawler units supported by the car body so as to be spaced in a width direction of the lower traveling body; an expansion/contraction device for moving the pair of crawler units so as to increase/decrease a unit interval which is the interval between the pair of crawler units in the width direction; and a pair of position detection units. The expansion/contraction device is capable of fixing the pair of crawler units at any of a plurality pairs of unit positions, which include a pair of full contraction positions involving the smallest unit interval, and a plurality of pairs of width enlargement positions involving respective unit intervals, each of which is the unit interval larger than the unit interval according to the pair of full contraction positions, the respective unit intervals being different from each other, the plurality of pairs of width enlargement positions, specifically, including a pair of intermediate projection positions and a pair of full projection positions.

In summary, the construction machine according to the second embodiment can be composed of the same components as the components of the construction machine according to the first embodiment except for specific configurations of the pair of position detection units. Below will be described the configuration of the pair of position detection units, and description of other components will be omitted.

FIG. 11 shows a pair of position detection units 20 according to the second embodiment. Each of the position detection units 20 includes a wire harness 21, a plurality of sensors 22, and a partition plate 23. The wire harness 21 is supported by the positioning link 13, in the same manner as the wire harness 11 according to the first embodiment, to be moved in the width direction integrally with each of the crawler units. The plurality of sensors 22 include a first sensor 22a and a second sensor 22b similarly to the plurality of sensors 12 according to the first embodiment. Each of the first and second sensors 22a and 22b is capable of making contact with the wire harness 21 and sensing the contact. The partition plate 23 is fixed to the car body 2a so as to provide a partition between the first sensor 22a and the second sensor 22b.

The first and second sensors 22a and 22b are fixed on the car body 2a, corresponding to the plurality of pairs of width enlargement positions, namely, the pair of intermediate projection position and the pair of full projection positions, respectively.

Each of the first sensor 22a and the second sensor 22b includes a sensing-side connector 22d. The sensing-side connector 22d is disposed so as to face the positioning link 13.

The wire harness 21 includes a plurality of electric wires bundled together, and has an end provided with a harness connector 21a. The harness connector 21a is capable of being coupled to the respective sensing-side connectors 22d of the first and second sensors 22a and 22b. In the construction machine according to the second embodiment, thus, the harness connector 21a of the wire harness 21 and each of the sensors 22 (first and second sensors 22a and 22b) can be brought into contact with each other, and each of the first and second sensors 22a and 22b is capable of sensing the contact thereof with the harness connector 21a of the wire harness 21.

It is not limited how each of the sensors 22 senses the contact of the sensor 22 itself with the wire harness 21. For example, preferable is a mode in which the harness connector 21a includes a pair of harness terminals, the wire harness 21 including a short-circuit line that short-circuits the pair of harness terminals, and the sensing-side connector 22d of each of the sensors 22 includes a pair of sensing-side terminals capable of being fitted with the pair of harness terminals, respectively. In this mode, the fitting of the pair of harness terminals of the harness connector 21a with the pair of sensing-side terminals renders the resistance value between the pair of sensing-side terminals of the sensing-side connector 22d low, whereas the absence of the fitting renders the value high. This enables the presence or absence of the contact of each of the sensors 22 with the harness connector 21a to be sensed through the magnitude of the resistance value.

Similarly to the wire harness 11 according to the first embodiment, the wire harness 21 is disposed so as to be opposed to the first sensor 22a, which is located on the inner side with respect to the width direction, in the traveling direction of the crawler unit 8, that is, the front-rear direction, as shown in FIG. 11, when the pair of crawler units are located at the pair of intermediate projection positions, and so as to be opposed to the second sensor 22b, which is located on the outer side with respect to the width direction, in the traveling direction, when the pair of crawler units are located at the pair of full projection positions.

Similarly to the wire harness 11 according to the first embodiment, the wire harness 21 can be removed from any of the first and second sensors 22a and 22b when the pair of crawler units are located at the pair of full contraction positions, and can be stored in the positioning link 13, for example, in a bundled state.

As shown in FIG. 11 and 12, the partition plate 23 is erected on the car body 2a so as to be interposed between the first sensor 22a and the second sensor 22b in each of the position detection units 20. The partition plate 23 enables the sensor 22 that can be connected with the wire harness 21 out of the plurality of sensors 22 to be reliably identified. FIG. 12 shows a state where the pair of crawler units are located at the pair of intermediate projection positions, in which state the harness connector 21a of the wire harness 21 is located at a position where the harness connector 21a is opposed to the sensing-side connector 22d of the first sensor 22a and can be coupled to the sensing-side connector 22d. Moreover, the partition plate 23 interposed between the first sensor 22a and the second sensor 22b prevents the harness connector 21a from being coupled to the sensing-side connector 22d of the second sensor 22b. Specifically, the partition plate 23 prevents the harness connector 21a of the wire harness 21 from reaching the sensing-side connector 22d of the second sensor 22b, thereby disabling the harness connector 21a from being coupled to the sensing-side connector 22d. The harness connector 21a is thus prevented from being coupled to the plurality of sensors 22 except for the sensing-side connector 22d of the sensor 22 that corresponds to the pair of width enlargement positions, and the sensor 22 to which the harness connector 21a can be connected depends on the pair of width enlargement positions. This allows the plurality of harness positions and the plurality of sensors to reliably correspond to each other one-to-one. Besides, the partition plate 23 can be also used for other applications, for example, used as a car body weight, a strength member, or the like.

The sensor 22 that senses the contact thereof with the wire harness 21 out the plurality of sensors 22 transmits the information about the sensor 22 itself to an appropriate place in the operation cabin, for example, through the detection signal line 22c shown in FIG. 11.

The construction machine according to the second embodiment can be used, for example, as follows.

At the time of arrival of the transported construction machine at the work site, the pair of crawler units 8 are fixed to the pair of full contraction positions. Meanwhile, the wire harness 21 is kept in an accommodated state. Specifically, one end of the wire harness 21, namely, the fixed end, is fixed to the distal end of the positioning link 13, while the other end, namely, the connection end provided with the harness connector 21a is removed from each of the sensors 22 to make no contact with any of the plurality of sensors 22.

In the above-described work site, the pair of crawler units 8 are projected from the pair of full contraction positions to one pair of the plurality pairs of width enlargement positions, namely, the pair of intermediate projection positions or the pair of full projection positions in this embodiment, for the preparation of the work by the construction machine 1. In other words, the interval between the pair of crawler units 8 is enlarged. Meanwhile, the wire harness 21 is connected to the sensor 22 corresponding to the width enlargement positions out of the plurality of sensors 22, for example, by manual operation by the operator, so as to bring the harness connector 21a at the connection end into contact with the sensor 22. Specifically, the wire harness 21 is connected to the first sensor 22a when the pair of crawler units 8 are located at the pair of intermediate projection positions, whereas the wire harness 21 is connected to the second sensor 22b when the pair of crawler units 8 are located at the pair of full projection positions.

Until this connection work is performed, the wire harness 11 is kept from contact with any of the plurality of sensors 22 regardless of movement of the pair of crawler units 8 to the pair of intermediate projection positions or the pair of full projection positions. Thus, any of the plurality of sensors 22 is kept from detection of the positions of the pair of crawler units 8, and it is judged that that the pair of crawler units 8 are still at the pair of full contraction positions, i.e., that no work can be performed by the construction machine 1. This causes the judgement that no work can be performed by the construction machine 1 to be continued when the work for connecting the wire harness 21 to any one of the plurality of sensors 22 is forgotten. The fail-safe operation is thus established. Besides, the partition plate 23 interposed between the first and second sensors 22a and 22b, which is the plurality of sensors 22, disables the wire harness 21 from coming into contact with the sensor different from the sensor that corresponds to the pair of unit positions of the pair of crawler units 8, out of the first and second sensors 22a and 22b, thereby preventing erroneous detection.

For changing the pair of width enlargement positions of the pair of crawler units 8 during work by the construction machine, at first, the wire harness 21 is removed from the sensor 22 to which the wire harness 21 had been connected. Next is performed changing the pair of the width enlargement positions of the pair of crawler units 8, that is, moving the pair of crawler units 8 in the width direction. Thereafter, the wire harness 21 is connected to the sensor 22 that corresponds to the changed pair of unit positions, which sensor is the first sensor 22a when the changed pair of the width enlargement positions are the pair of intermediate projection positions or the second sensor 22b when the changed pair of the width enlargement positions are the pair of full projection positions.

Preferably, the construction machine further includes an automatic connection-release mechanism. The automatic connection-release mechanism is a mechanism for automatically releasing the contact of the harness connector 21a of the wire harness 21 with the sensing-side connector 22d of the sensor 22 when the unit positions of the pair of crawler units 8 are changed while the wire harness 21 is left connected to the sensor 22 corresponding to the pair of width enlargement positions that has not been changed yet. The automatic connection-release mechanism, which automatically releases the contact of the harness connector 21a with the sensor 22 when the unit positions are changed while the removal of the wire harness 21 from the sensor 22 is forgotton, thereby causing the judgment that the pair of crawler units 8 are located at the pair of full contraction positions, that is, the judgement that no work can be performed by the construction machine. The fail-safe operation is thus established.

After the finish of the work by the construction machine, the connection end (the harness connector 21a) of the wire harness 21 is removed from the sensor 22 that had been connected to the connection end, out of the plurality of sensors 22, and stored in a bundled state, for example, by manual work by an operator. Specifically, the wire harness 21 may be either supported by the positioning link 13 as it is or removed from the positioning link 13 and stored in another part. The pair of crawler units 8 are, thereafter, retracted to the pair of full contraction positions, which brings the construction machine into a transportable state (non-working state).

According to the construction machine that has been described above, the connection of the harness connector 21a included in the wire harness 21 with each of the sensors 22 enables the sensor 22 and the wire harness 21 to make reliable contact with each other, reducing the risk of malfunction.

The above embodiment is not intended to limit the configuration of the present invention. Therefore, the above-described embodiments may be omitted, substituted or added to the components of the above-described embodiments based on the description and technical knowledge of the present specification.

Although the construction machine 1 shown in FIG. 1 includes the boom 4 and the hook 5, the present invention does not absolutely require any boom or any hook. The present invention can be widely applied to a construction machine including a pair of crawler units and an expansion/contraction device that increases or decreases the interval between the pair of crawler units in the width direction.

Although the expansion/contraction device 9 according to the first embodiment includes an expansion/contraction cylinder 9b which is horizontally expandable and contractable, the power is not limited for increasing or decreasing the unit interval which is the interval between the pair of crawler units according to the present invention.

Although the plurality of pairs of expansion/contraction positions according to the first and second embodiments include two expansion/contraction positions, namely, the pair of intermediate projection positions and the pair of full projection positions, the plurality of pairs of expansion/contraction positions may include three or more pairs of expansion/contraction positions.

Although the plurality of sensors 12, 22, in the first and second embodiments, are fixed to the car body 2a while the wire harnesses 11, 21 as the sensing target parts are supported on the pair of crawler units 8 through the positioning link 13 so as to be movable together with the pair of crawler units 8 in the expansion/contraction direction (width direction), it is also possible that, conversely, the sensing target part is fixed to the car body and the plurality of sensors are supported by one crawler unit out of the plurality of sensors, the one crawler unit corresponding to the position detection unit to which the plurality of sensors belong, so as to be movable in the width direction together with the one crawler unit.

Although each of the wire harnesses 11, 21 as the sensing target parts, in the first and second embodiments, is kept from contact with any of the plurality of sensors 12, 22 when the pair of crawler units 8 are located at the pair of full contraction positions, the construction machine may further include a sensor that senses the sensing target part when the pair of crawler units are located at the pair of full contraction positions.

Although the lower traveling body 2 according to the first and second embodiments includes the pair of position detection units 10, 20, respectively, the position detection unit included in the lower traveling body may be a single one which is provided only for one of the pair of crawler units.

Although the pair of position detection units 10, 20 (the wire harnesses 11, 21 and the plurality of sensors 12, 22) according to the first and second embodiments are provided in front or rear of the lower traveling body 2, a pair of position detection units may be provided in each of front and rear of the lower traveling body. In other words, the lower traveling body may have two pairs of position detection units. This makes it possible to prevent malfunction more reliably.

The partition plate 23 according to the second embodiment is not essential but optional. For example, it is also possible, to set respective positions of the sensors 12 shown in FIG. 6 and/or the wire harness 11 so as to restrict the wire harness 11 from coming into contact with the plurality of sensors 12 except for the sensor 12 that corresponds to the actual width enlargement positions, that is, so as to render the sensors corresponding to the plurality of width enlargement positions different from each other.

## Claims

1. A construction machine (1) comprising:
a lower traveling body (2); and
an upper turning body (3) mounted on the lower traveling body (2) capably of turning,
the lower traveling body (2) including:
a car body (2a);
a pair of crawler units (8) spaced in a width direction of the lower traveling body (2) and supported by the car body (2a) so as to have a changeable unit interval, which is an interval between the pair of crawler units (8) in the width direction;
an expansion/contraction device (9) that is configured to move the pair of crawler units (8) relatively to each other in the width direction so as to change the unit interval, the expansion/contraction device (9) being capable of fixing the pair of crawler units (8) at any of a plurality of different pairs of unit positions, the plurality of pairs of unit positions including a pair of full contraction positions involving the smallest unit interval and a plurality of pairs of width enlargement positions involving respective unit intervals, each of which is the unit interval larger than the unit interval according to the pair of full contraction positions, the respective unit intervals being different from each other; and
at least one position detection unit (10; 20) configured to detect the pair of unit positions, wherein:
the at least one position detection unit (10; 20) includes a sensing target part (11; 21) and a plurality of sensors (12; 22) corresponding to the plurality of pairs of width enlargement positions, respectively;
one of the sensing target part (11; 21) and the plurality of sensors (12; 22) is fixed to the car body (2a), and the other of the sensing target part (11; 21) and the plurality of sensors (12; 22) is supported by one crawler unit (8), which is one of the pair of crawler units (8), so as to be moved in the width direction together with the one crawler unit (8); and
the sensing target part (11; 21) and the plurality of sensors (12; 22) are disposed so as to allow only a corresponding sensor (12a, 12b; 22a, 22b) included in the plurality of sensors (12; 22) to sense a presence of the sensing target part (12, 22), the corresponding sensor (12a, 12b; 22a, 22b) being a sensor corresponding to the pair of width enlargement positions at which the pair of crawler units (8) are being located
wherein the sensing target part (11; 21) and the plurality of sensors (12, 22) are disposed so as to allow the sensing target part (11; 21) to come into contact with only the corresponding sensor (12a, 12b; 22a, 22b) included in the plurality of sensors (12; 22), the corresponding sensor (12a, 12b; 22a, 22b) being a sensor corresponding to the pair of width enlargement positions at which the pair of crawler units (8) are being located, and each of the sensors (12; 22) is configured to sense a contact of the sensor (12; 22) itself with the sensing target part (11; 21),
**characterized in that**
the sensing target part (11; 21) includes a wire harness including a plurality of electric wires bundled with each other, the wire harness (11; 21) having a connection end contactable with each of the sensors (12; 22).

2. The construction machine (1) according to claim 1, wherein the connection end of the wire harness (21) is provided with a harness connector (21a) and each of the sensors (22) is provided with a sensing-side connector (22d) connectable to the harness connector.

3. The construction machine (1) according to claim 1 or 2, wherein the plurality of sensors (12; 22) are fixed to the car body (2a), and the sensing target part (11; 21) is supported by the one crawler unit (8) so as to be moved in the width direction together with the one crawler unit (8).

4. The construction machine (1) according to any one of claims 1 to 3, wherein the at least one position detection unit (10; 20) includes a pair of position detection units (10; 20) provided for the pair of crawler units (8), respectively.

5. The construction machine (1) according to any one of claims 1 to 4, further comprising:
a boom (4) attached to the upper turning body (3) capably of derricking; and
a moment limiter (16) configured to determine an upper limit value of an overturning moment that acts on the construction machine (1) when the boom (4) is derricked and controls the overturning moment so as to prevent the overturning moment from exceeding the upper limit value, wherein
the moment limiter (16) is configured to set the upper limit value in correspondence to the sensor (12; 22) that senses the presence of the sensing target part (11; 21) out of the plurality of sensors (12; 22).

6. The construction machine (1) according to any one of claims 1 to 5, wherein the sensing target part (11; 21) and the plurality of sensors (12; 22) are disposed so as to prevent the presence of the sensing target part (11; 21) from being sensed by any of the plurality of sensors (12; 22) when the pair of crawler units (8) are located at the pair of full contraction positions.

7. The construction machine (1) according to any one of claims 1 to 6, wherein the upper turning body (3) further includes an operation cabin (7), in which a display device (7a) is provided to display the pair of unit positions that is identified based on results of sensing by the plurality of sensors (12; 22).

## Patentansprüche

1. Baumaschine (1) mit:
einem unteren Fahrkörper (2); und
einem oberen Drehkörper (3), der auf dem unteren Fahrkörper (2) angebracht ist, wobei er in der Lage ist, sich zu drehen,
wobei der untere Fahrkörper (2) umfasst:
einen Fahrzeugkörper (2a);
ein Paar von Raupenketteneinheiten (8), die in einer Breitenrichtung des unteren Fahrkörpers (2) beabstandet sind und durch den Fahrzeugkörper (2a) gehalten werden, um ein änderbares Einheitsintervall aufzuweisen, das ein Intervall zwischen dem Paar von Raupenketteneinheiten (8) in der Breitenrichtung ist;
eine Expansions-/Kontraktionsvorrichtung (9), die konfiguriert ist, das Paar von Raupenketteneinheiten (8) relativ zueinander in der Breitenrichtung zu bewegen, um das Einheitsintervall zu ändern, wobei die Expansions-/Kontraktionsvorrichtung (9) in der Lage ist, das Paar von Raupenketteneinheiten (8) bei einem aus einer Vielzahl von unterschiedlichen Paaren von Einheitspositionen zu fixieren, wobei die Vielzahl von Paaren von Einheitspositionen ein Paar von Vollkontraktionspositionen, das das kleinste Einheitsintervall beinhaltet, und eine Vielzahl von Paaren von Breitenvergrößerungspositionen umfasst, die jeweilige Einheitsintervalle beinhalten, von denen jedes ein Einheitsintervall ist, das größer als das Einheitsintervall entsprechend dem Paar von Vollkontraktionspositionen ist, wobei die jeweiligen Einheitsintervalle zueinander unterschiedlich sind; und
zumindest eine Positionserfassungseinheit (10; 20), die konfiguriert ist, das Paar von Einheitspositionen zu erfassen, wobei:
die zumindest eine Positionserfassungseinheit (10; 20) einen Erfassungszielteil (11; 21) und eine Vielzahl von Sensoren (12; 22) umfasst, die jeweils der Vielzahl von Paaren von Breitenvergrößerungspositionen entsprechen;
einer aus dem Erfassungszielteil (11; 21) und der Vielzahl von Sensoren (12; 22) bei dem Fahrzeugkörper (2a) fixiert ist, wobei der andere des Erfassungszielteils (11; 21) und der Vielzahl von Sensoren (12; 22) durch eine Raupenketteneinheit (8) gehalten wird, die eine des Paars von Raupenketteneinheiten (8) ist, um in der Breitenrichtung zusammen mit der einen Raupenketteneinheit (8) bewegt zu werden; und
der Erfassungszielteil (11; 21) und die Vielzahl von Sensoren (12; 22) angeordnet sind, um es lediglich einem entsprechenden Sensor (12a, 12b; 22a, 22b), der in der Vielzahl von Sensoren (12; 22) beinhaltet ist, zu erlauben, ein Vorhandensein des Erfassungszielteils (12, 22) zu erfassen, wobei der entsprechende Sensor (12a, 12b; 22a, 22b) ein Sensor ist, der dem Paar von Breitenvergrößerungspositionen entspricht, bei dem das Paar von Raupenketteneinheiten (8) positioniert ist,
wobei der Erfassungszielteil (11; 21) und die Vielzahl von Sensoren (12, 22) angeordnet sind, um es dem Erfassungszielteil (11; 21) zu erlauben, in Kontakt mit lediglich dem entsprechenden Sensor (12a, 12b; 22a, 22b) zu kommen, der in der Vielzahl von Sensoren (12, 22) beinhaltet ist, wobei der entsprechende Sensor (12a, 12b; 22a, 22b) ein Sensor ist, der dem Paar von Breitenvergrößerungspositionen entspricht, bei dem das Paar von Raupenketteneinheiten (8) positioniert ist, wobei jeder der Sensoren (12, 22) konfiguriert ist, einen Kontakt des Sensors (12; 22) selbst mit dem Erfassungszielteil (11; 21) zu erfassen,
**dadurch gekennzeichnet, dass**
der Erfassungszielteil (11; 21) einen Kabelstrang umfasst, der eine Vielzahl von elektrischen Drähten umfasst, die miteinander gebündelt sind, wobei der Kabelstrang (11; 21) ein Verbindungsende aufweist, das mit jedem der Sensoren (12; 22) kontaktierbar ist.

2. Baumaschine (1) nach Anspruch 1, wobei das Verbindungsende des Kabelstrangs (21) mit einer Kabelstrangverbindungseinrichtung (21a) versehen ist und jeder der Sensoren (22) mit einer erfassungsseitigen Verbindungseinrichtung (22d) versehen ist, die mit der Kabelstrangverbindungseinrichtung verbindbar ist.

3. Baumaschine (1) nach Anspruch 1 oder 2, wobei die Vielzahl von Sensoren (12; 22) an dem Fahrzeugkörper (2a) fixiert ist, wobei der Erfassungszielteil (11; 21) durch die eine Raupenketteneinheit (8) gehalten wird, um in der Breitenrichtung zusammen mit der einen Raupenketteneinheit (8) bewegt zu werden.

4. Baumaschine (1) nach einem der Ansprüche 1 bis 3, wobei die zumindest eine Positionserfassungseinheit (10; 20) ein Paar von Positionserfassungseinheiten (10; 20) umfasst, die jeweils für das Paar von Raupenketteneinheiten (8) bereitgestellt sind.

5. Baumaschine (1) nach einen der Ansprüche 1 bis 4, ferner mit:
einem Ausleger (4), der an dem oberen Drehkörper (3) angebracht ist, der in der Lage ist, zu wippen; und
einer Momentbegrenzungseinrichtung (16), die konfiguriert ist, einen oberen Grenzwert eines Kippmoments, das auf die Baumaschine (1) wirkt, wenn der Ausleger (4) gewippt wird, zu bestimmen, wobei sie das Kippmoment steuert, um zu verhindern, dass das Kippmoment den oberen Grenzwert überschreitet, wobei
die Momentbegrenzungseinrichtung (16) konfiguriert ist, den oberen Grenzwert entsprechend dem Sensor (12; 22), der aus der Vielzahl von Sensoren (12; 22) das Vorhandensein des Erfassungszielteils (11; 21) erfasst, einzustellen.

6. Baumaschine (1) nach einem der Ansprüche 1 bis 5, wobei der Erfassungszielteil (11; 21) und die Vielzahl von Sensoren (12; 22) angeordnet sind, um zu verhindern, dass das Vorhandensein des Erfassungszielteils (11; 21) durch irgendeinen der Vielzahl von Sensoren (12; 22) erfasst wird, wenn das Paar von Raupenketteneinheiten (8) bei dem Paar von Vollkontraktionspositionen positioniert ist.

7. Baumaschine (1) nach einem der Ansprüche 1 bis 6, wobei der obere Drehkörper (3) ferner eine Bedienungskabine (7) umfasst, in der eine Anzeigevorrichtung (7a) bereitgestellt ist, um das Paar von Einheitspositionen, das auf der Grundlage von Ergebnissen einer Erfassung durch die Vielzahl von Sensoren (12; 22) identifiziert wird, anzuzeigen.

## Revendications

1. Machine de construction (1) comprenant :
un corps inférieur mobile (2) ; et
un corps supérieur pivotant (3) monté sur le corps inférieur mobile (2) et pouvant pivoter,
le corps inférieur mobile (2) comportant :
un corps de véhicule (2a) ;
une paire d'unités de chenille (8) espacées dans un sens de la largeur du corps inférieur mobile (2) et soutenues par le corps de véhicule (2a) de manière à avoir un intervalle entre les unités variable, qui est un intervalle entre la paire d'unités de chenille (8) dans le sens de la largeur ;
un dispositif d'expansion/de contraction (9) qui est configuré pour déplacer la paire d'unités de chenille (8) l'une par rapport à l'autre dans le sens de la largeur de manière à changer l'intervalle entre les unités, le dispositif d'expansion/de contraction (9) étant capable de fixer la paire d'unités de chenille (8) à l'une quelconque d'une pluralité de paires différentes de positions d'unités, la pluralité de paires de positions d'unités comportant une paire de positions de contraction totale impliquant l'intervalle entre les unités le plus petit et une pluralité de paires de positions d'élargissement de la largeur impliquant des intervalles entre les unités respectifs, chacun d'entre eux étant l'intervalle entre les unités plus grand que l'intervalle entre les unités selon la paire de positions de contraction totale, les intervalles entre les unités respectifs étant différents les uns des autres ; et
au moins une unité de détection de position (10 ; 20) configurée pour détecter la paire de positions d'unités, dans laquelle :
la au moins une unité de détection de position (10 ; 20) comporte une partie cible de détection (11 ; 21) et une pluralité de capteurs (12 ; 22) correspondant respectivement à la pluralité de paires de positions d'élargissement de la largeur ;
l'une de la partie cible de détection (11 ; 21) et de la pluralité de capteurs (12 ; 22) est fixée au corps de véhicule (2a), et l'autre de la partie cible de détection (11 ; 21) et de la pluralité de capteurs (12 ; 22) est supportée par une unité de chenille (8), qui est l'une de la paire d'unités de chenille (8), de manière à être déplacée dans le sens de la largeur ensemble avec l'unité de chenille (8) ; et
la partie cible de détection (11 ; 21) et la pluralité de capteurs (12 ; 22) sont disposées de manière à permettre uniquement à un capteur correspondant (12a, 12b ; 22a, 22b) inclus dans la pluralité de capteurs (12 ; 22) de détecter une présence de la partie cible de détection (12, 22), le capteur correspondant (12a, 12b ; 22a, 22b) étant un capteur correspondant à la paire de positions d'élargissement de la largeur dans lesquelles la paire d'unités de chenille (8) est située,
dans lequel la partie cible de détection (11 ; 21) et la pluralité de capteurs (12, 22) sont disposés de manière à permettre à la partie cible de détection (11 ; 21) d'entrer en contact uniquement avec le capteur correspondant (12a, 12b ; 22a, 22b) inclus dans la pluralité de capteurs (12 ; 22), le capteur correspondant (12a, 12b ; 22a, 22b) étant un capteur correspondant à la paire de positions d'élargissement de la largeur dans lesquelles la paire d'unités de chenille (8) est située, et chacun des capteurs (12 ; 22) étant configuré pour détecter un contact du capteur (12 ; 22) lui-même avec la partie cible de détection (11 ; 21),
**caractérisé en ce que**
la partie cible de détection (11 ; 21) comporte un faisceau de câbles comportant une pluralité de câbles électriques regroupés les uns avec les autres, le faisceau de câbles (11 ; 21) ayant une extrémité de connexion pouvant entrer en contact avec chacun des capteurs (12 ; 22).

2. Machine de construction (1) selon la revendication 1, dans laquelle l'extrémité de connexion du faisceau de câbles (21) est pourvue d'un connecteur de faisceau (21a) et chacun des capteurs (22) est pourvu d'un connecteur côté détection (22d) pouvant être connecté au connecteur de faisceau.

3. Machine de construction (1) selon la revendication 1 ou 2, dans laquelle la pluralité de capteurs (12 ; 22) sont fixés au corps (2a) de véhicule, et la partie cible de détection (11 ; 21) est supportée par la une unité de chenille (8) de manière à être déplacée dans le sens de la largeur avec la une unité de chenille (8).

4. Machine de construction (1) selon l'une quelconque des revendications 1 à 3, dans laquelle la au moins une unité de détection de position (10 ; 20) comporte une paire d'unités de détection de position (10 ; 20) prévues respectivement pour la paire d'unités de chenille (8).

5. Machine de construction (1) selon l'une quelconque des revendications 1 à 4, comprenant en outre :
une flèche (4) fixée au corps de rotation supérieur (3) et capable de basculer ; et
un limiteur de moment (16) configuré pour déterminer une valeur limite supérieure d'un moment de renversement qui agit sur la machine de construction (1) lorsque la flèche (4) est mise en mât de levage et pour contrôler le moment de renversement de manière à empêcher le moment de renversement de dépasser la valeur limite supérieure, dans laquelle
le limiteur de moment (16) est configuré pour régler la valeur limite supérieure en correspondance avec le capteur (12 ; 22) qui détecte la présence de la partie cible de détection (11 ; 21) parmi la pluralité de capteurs (12 ; 22).

6. Machine de construction (1) selon l'une quelconque des revendications 1 à 5, dans laquelle la partie cible de détection (11 ; 21) et la pluralité de capteurs (12 ; 22) sont disposés de manière à empêcher que la présence de la partie cible de détection (11 ; 21) soit détectée par l'un quelconque de la pluralité de capteurs (12 ; 22) lorsque la paire d'unités de chenille (8) est située à la paire de positions de contraction totale.

7. Machine de construction (1) selon l'une quelconque des revendications 1 à 6, dans laquelle le corps supérieur pivotant (3) comporte en outre une cabine de commande (7), dans laquelle un dispositif d'affichage (7a) est prévu pour afficher la paire de positions des unités qui est identifiée sur la base des résultats de la détection par la pluralité de capteurs (12 ; 22).
